# EUROPEAN PATENT APPLICATION

(11) **EP 4 737 284 A1**
(43) Date of publication of application: **06.05.2026**
(21) Application number: 25200178.9
(22) Date of filing: 04.09.2025
(51) Int. Cl.: B62J 41/00, B62K 11/14, B62K 23/02, H01H 23/26, B62J 17/10, B62K 11/04, B62M 7/04

(54) **STRADDLED VEHICLE**

(30) Priority: 30.10.2024 JP 2024190271
(71) Applicant: Yamaha Hatsudoki Kabushiki Kaisha, Iwata-shi, Shizuoka 438-8501 (JP)
(72) Inventor: Kun Lin, Tsai, 30346 Hukou Township, Hsinchu county (TW)
(74) Representative: Grünecker Patent- und Rechtsanwälte PartG mbB

(57) **Abstract**

A straddled vehicle (1) includes a handle grip (12, 13), a switch case (15), and a first operation switch (16). The switch case (15) is disposed inward of the handle grip (12, 13) in the vehicle (1) width direction. The switch case (15) includes an opening (21). The first operation switch (16) is a seesaw type switch and protrudes from the opening (21). The first operation switch (16) includes an outer switch (32) and an inner switch (33). The inner switch (33) is integrated with the outer switch (32). The inner switch (33) is disposed inward of the outer switch (32) in the vehicle (1) width direction. The length of the inner switch (33) in the vehicle (1) width direction is longer than the length of the outer switch (32) in the vehicle (1) width direction.

## Description

The present invention relates to a straddled vehicle.

Some straddled vehicles have an operation switch disposed on the inside of the handle grip in the vehicle width direction. For example, the straddled vehicle disclosed in JP 2023-118451 A includes a switch box attached to the handlebar. The switch box includes a switch case and a plurality of switches. The plurality of switches are separate from one another and are provided in the switch case. The plurality of switches are used to operate setting menus for the navigation system, the audio system, or the like, which are displayed on the display.

The straddled vehicle of WO 2018/134989 A1 includes a switch case that is attached to the handlebar. The switch case includes a composite switch 49 for operating the navigation display device. The composite switch has a cross shape and is operable up and down and left and right.

In the straddled vehicle of the above-mentioned JP 2023-118451 A, the plurality of switches are separate from one another. Therefore, a gap is provided between each of the plurality of switches. Therefore, it is not easy to reduce the size of the operation switch.

In the straddled vehicle of WO 2018/134989 A1, up, down, left and right switches are integrated into the composite switch. Therefore, the operation switch can be made smaller than that in JP 2023-118451 A. However, if the operation switch is made smaller, it becomes difficult for the rider to operate the operation switch.

In particular, when the operation switch is disposed on the inside of the handle grip in the vehicle width direction, the rider operates the operation switch with his or her thumb. The portion of the operation switch that is located inward in the vehicle width direction is far away from the thumb and is difficult to operate. Therefore, if the operation switch is made smaller, the portion of the operation switch that is positioned inward in the vehicle width direction becomes even more difficult to operate. An object of the present invention is to provide a straddled vehicle having a compact size of an operation switch. According to the present invention said object is solved by a straddled vehicle having the features of independent claim 1. Preferred embodiments are laid down in the dependent claims. Hence, it is possible to reduce the size of an operation switch in a straddled vehicle and to improve the operability of the operation switch.

A straddled vehicle according to one aspect includes a handle grip, a switch case, and a first operation switch. The switch case is disposed inward of the handle grip in a vehicle width direction. The switch case includes an opening. The first operation switch is a seesaw type switch and protrudes from the opening. The first operation switch includes an outer switch and an inner switch. The inner switch is integrated with the outer switch. The inner switch is disposed inward of the outer switch in the vehicle width direction. The length of the inner switch in the vehicle width direction is longer than the length of the outer switch in the vehicle width direction.

In the straddled vehicle according to the present aspect, the outer switch and the inner switch are integrated in the first operation switch. Therefore, the first operation switch can be made smaller. Further, the length of the inner switch in the vehicle width direction is longer than the length of the outer switch in the vehicle width direction. This makes it easier for the rider's thumb to reach the inner switch, making it easier to operate the inner switch. This makes it possible to improve the operability of the first operation switch even if the first operation switch is made smaller.

The inner switch may include an inner edge adjacent to the outer switch. The inner edge may be located outward in the vehicle width direction from a vertical center line of the first operation switch. In this case, the inner switch extends long in the vehicle width direction, thereby improving the operability of the inner switch.

The inner switch may include an extension portion and a main portion. The extension portion may overlap the vertical center line of the first operation switch as seen in a top view. The main portion may be disposed inward in the vehicle width direction of the extension portion. The length of the main portion in the up-down direction may be longer than the length of the extension portion in the up-down direction. In this case, the operability of the inner switch is improved by having the long main portion of the inner switch, which is difficult for the thumb to reach.

The length of the outer switch in the up-down direction may be longer than the length of the extension portion of the inner switch in the up-down direction. In this case, the outer switch is shorter than the inner switch in the vehicle width direction, but the outer switch is longer in the up-down direction than the extension portion of the inner switch, improving operability of the outer switch.

The first operation switch may include an upper switch and a lower switch. The upper switch may be located above the extension portion of the inner switch. The lower switch may be located below the extension portion of the inner switch. In this case, the upper and lower switches enable even more diverse operations.

The upper switch and the lower switch may be symmetrical with respect to a horizontal center line of the first operation switch. In this case, the operability of the upper switch and the lower switch is improved.

The inner switch, the outer switch, the upper switch and the lower switch may be integrated with each other. In this case, the first operation switch is made smaller.

The length of the upper switch in the vehicle width direction may be greater than the length of the extension portion in the vehicle width direction. The length of the lower switch in the vehicle width direction may be greater than the length of the extension portion in the vehicle width direction. In this case, the operability of the upper switch and the lower switch is improved.

The height of the inner switch from the top surface of the opening may be greater than the height of the outer switch from the top surface of the opening. In this case, the height of the inner switch, which is difficult for the thumb to reach, is high, thereby improving the operability of the inner switch.

The inner switch may include an inner edge, an upper flat surface, and an inclined surface. The inner edge may be adjacent to the outer switch. The upper flat surface may be disposed inward in the vehicle width direction from the inner edge. The upper flat surface may be disposed above the inner edge. The inclined surface may be disposed between the inner edge and the upper flat surface in the vehicle width direction. The inclined surface may extend obliquely upward from the inner edge toward the upper flat surface. In this case, the inner switch can be operated by pressing the inclined surface, improving the operability of the inner switch.

The inclined surface may overlap the vertical center line of the first operation switch as seen in the top view. In this case, by arranging the inclined surface at a position overlapping with the vertical center line of the first operation switch, the operability of the inner switch due to the inclined surface is improved.

The length of the upper flat surface in the vehicle width direction may be longer than the length of the inclined surface in the vehicle width direction. In this case, the upper flat surface, which is difficult for the thumb to reach, is long in the vehicle width direction, improving the operability of the inner switch via the upper flat surface.

The outer switch and the inner switch may be asymmetric with respect to the vertical center line of the first operation switch and symmetric with respect to the horizontal center line of the first operation switch. In this case, the asymmetric shape of the operation switch improves operability. Furthermore, the vertically symmetrical shape of the operation switch allows for a compact design and improves the appearance.

The outer shape of the first operation switch may be symmetrical with respect to the vertical center line of the first operation switch. The outer shape of the first operation switch may be symmetrical with respect to the horizontal center line of the first operation switch. In this case, the vertical and horizontal symmetry of the outer shape of the operation switch allows the operation switch to be made smaller and improves its appearance.

The straddled vehicle may further include a second operation switch. The second operation switch may be disposed outward in the vehicle width direction from the first operation switch. In this case, if the second operation switch is disposed outward of the first operation switch in the vehicle width direction, it becomes even more difficult to operate the first operation switch. However, in the present invention, the inner switch is longer than the outer switch in the vehicle width direction, making the inner switch easier to operate. This can improve the operability of the first operation switch.

### BRIEF DESCRIPTION OF THE DRAWINGS

FIG. 1 is a side view of a straddled vehicle according to an embodiment.
FIG. 2 is a top view showing a structure around a handlebar.
FIG. 3 is a diagram showing an example of a screen displayed on a display.
FIG. 4 is an enlarged view of a switch case.
FIG. 5 is a cross-sectional view taken along line V-V in FIG. 4.
FIG. 6 is a cross-sectional view taken along line VI-VI in FIG. 4.
FIG. 7 is an enlarged view of a first operation switch.
FIG. 8 is an enlarged view of the first operation switch, showing a dimensional relationship between the switches of the first operation switch.

### DETAILED DESCRIPTION

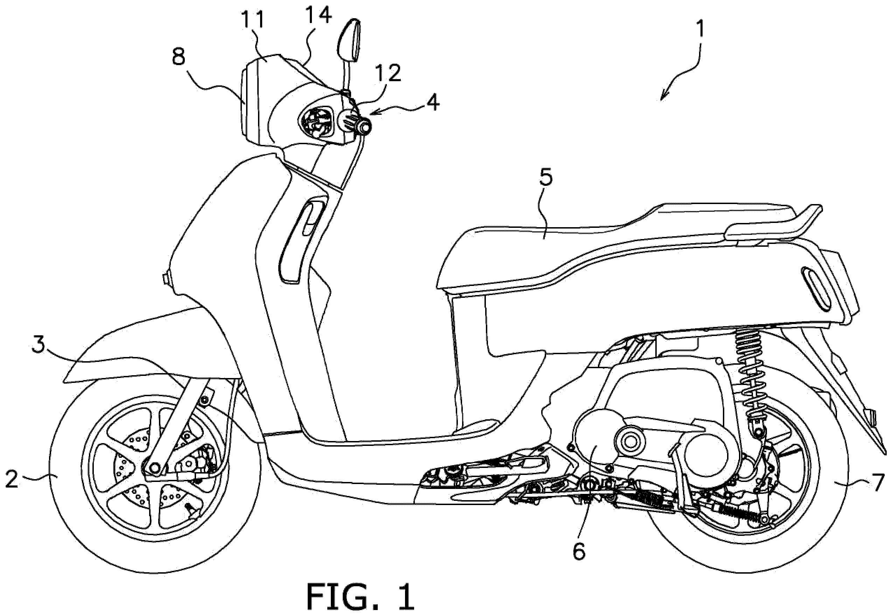

Hereinafter, a straddled vehicle according to an embodiment will be described with reference to the drawings. FIG. 1 is a side view of a straddled vehicle 1 according to an embodiment. The straddled vehicle 1 according to the present embodiment is a scooter. As shown in FIG. 1, the straddled vehicle 1 includes a front wheel 2, a front fork 3, a handlebar 4, a seat 5, a power unit 6, and a rear wheel 7. The front wheel 2 is rotatably supported by the front fork 3. The handlebar 4 is turnable left and right together with the front fork 3 and the front wheel 2. The seat 5 is disposed behind the handlebar 4. The power unit 6 includes, for example, an engine. The power unit 6 may include an electric motor. The rear wheel 7 are driven by the power unit 6.

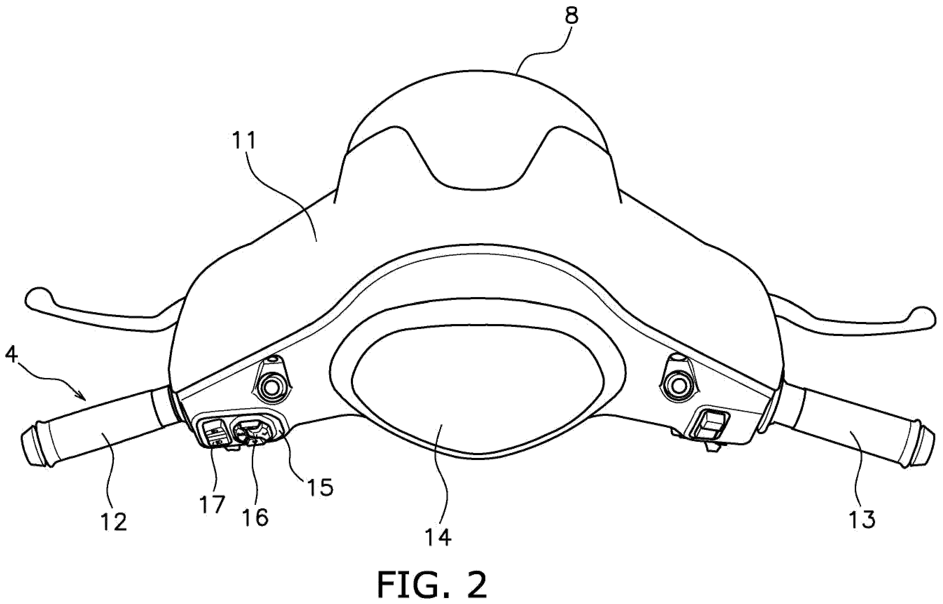

FIG. 2 is a top view showing the structure around the handlebar 4. The straddled vehicle 1 includes a handle cover 11. The handlebar 4 protrude from the handle cover 11 to the left and right. As shown in FIG. 2, the handlebar 4 includes left and right handle grips 12 and 13. The left handle grip 12 is disposed to the left of the handle cover 11. The right handle grip 13 is disposed to the right of the handle cover 11.

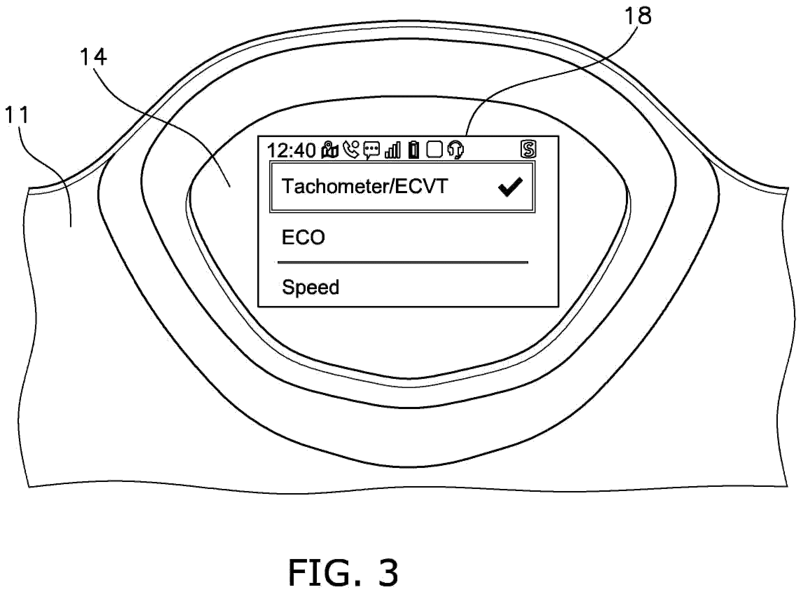

The straddled vehicle 1 includes a display 14, a switch case 15, a first operation switch 16, and a second operation switch 17. FIG. 3 is a diagram showing an example of a screen displayed on the display 14. As shown in FIG. 3, the display 14 displays a screen 18. The screen 18 is changeable. The screen 18 may show information about the straddled vehicle 1, such as the vehicle speed. The screen 18 may show a display selection screen. The screen 18 may show the screen of an application such as navigation or audio.

As shown in FIG. 2, the switch case 15 is disposed inward of the left handle grip 12 in the vehicle width direction. The switch case 15 is disposed between the left handle grip 12 and the display 14. The switch case 15 is integrated with the handle cover 11. Alternatively, the switch case 15 may be separate from the handle cover 11.

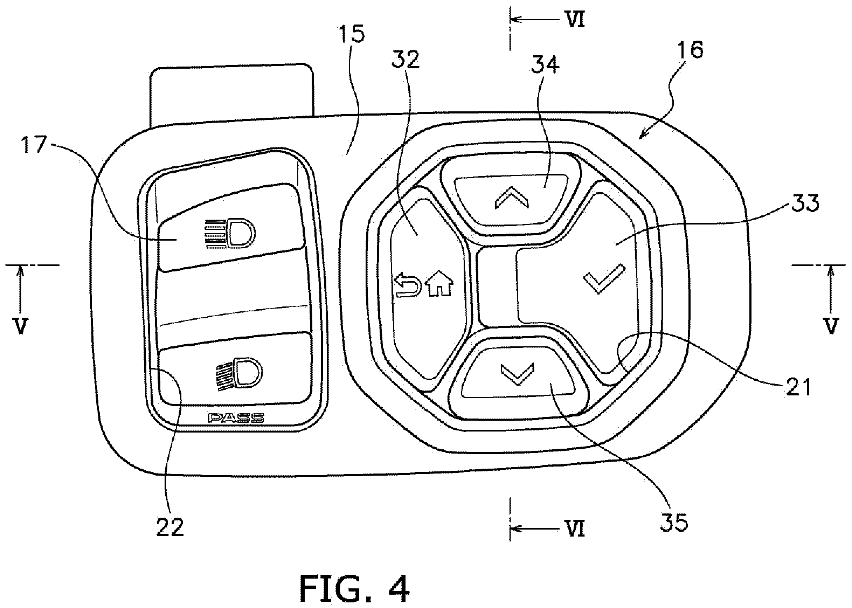

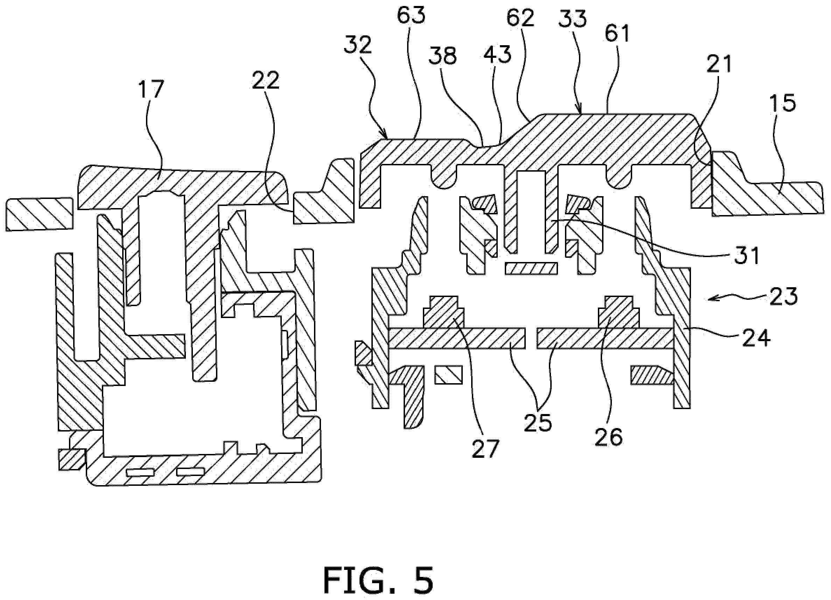

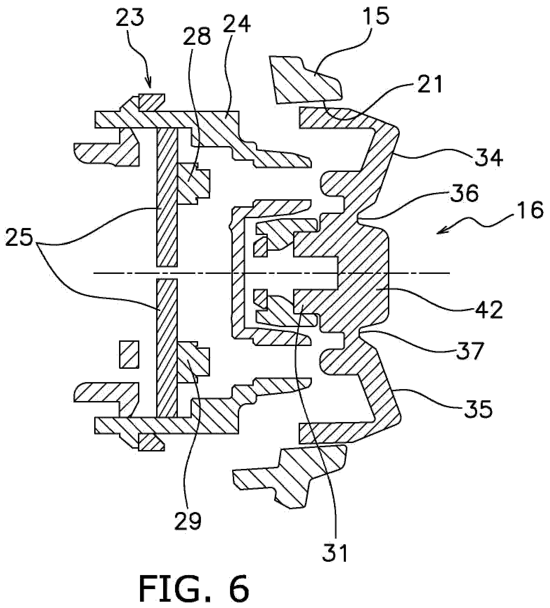

The first operation switch 16 and the second operation switch 17 are disposed on the switch case 15. FIG. 4 is an enlarged view of the switch case 15. FIG. 5 is a cross-sectional view taken along line V-V in FIG. 4. FIG. 6 is a cross-sectional view taken along line VI-VI in FIG. 4. As shown in FIGS. 4 to 6, the switch case 15 includes a first opening 21 and a second opening 22. The first operation switch 16 protrudes from the first opening 21. The second operation switch 17 protrudes from the second opening 22. The first operation switch 16 and the second operation switch 17 is operable by a rider's thumb while gripping the left handle grip 12.

The first operation switch 16 is disposed inward of the second operation switch 17 in the vehicle width direction. The first operation switch 16 is a switch for operating the display 14. For example, the first operation switch 16 is operated to operate a setting menu displayed on the screen 18 of the display 14.

The second operation switch 17 is disposed outward of the first operation switch 16 in the vehicle width direction. The second operation switch 17 is disposed between the left handle grip 12 and the first operation switch 16 in the vehicle width direction. As shown in FIG. 1, the straddled vehicle 1 includes a headlight 8. The second operation switch 17 is a dimmer switch for switching the headlight 8 between high beam and low beam.

As shown in FIGS. 5 and 6, a switch assembly 23 is disposed in the switch case 15. The switch assembly 23 includes an inner case 24, a substrate 25, and switch elements 26-29. The substrate 25 is disposed in the inner case 24. The switch elements 26-29 are disposed on the substrate 25. The switch elements 26-29 are, for example, tactile switches. A pusher (not shown) is disposed between the first operation switch 16 and the switch elements 26-29. When the first operation switch 16 is operated, the first operation switch 16 presses the switch element 26-29 via the pusher.

The first operation switch 16 is a seesaw type switch. The first operation switch 16 includes a shaft 31. The shaft 31 protrudes toward the switch assembly 23. The shaft 31 is supported by the inner case 24. The first operation switch 16 is supported by the inner case 24 so as to be pivotable up, down, left and right.

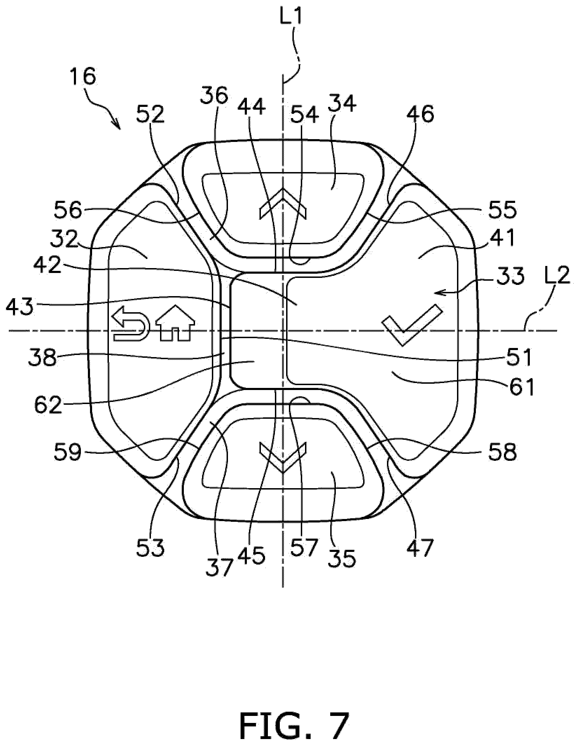

FIG. 7 is an enlarged view of the first operation switch 16. As shown in FIG. 7, the first operation switch 16 has an octagonal outer shape. The outer shape of the first operation switch 16 is symmetrical with respect to a vertical center line L1 of the first operation switch 16 and is symmetrical with respect to a horizontal center line L2 of the first operation switch 16.

The first operation switch 16 includes an outer switch 32, an inner switch 33, an upper switch 34, and a lower switch 35. For example, the outer switch 32 is assigned the functions of a home button and a back button. The inner switch 33 is assigned the function of a decision button. The upper switch 34 and the lower switch 35 are assigned the function of buttons for moving a cursor on the screen. However, the functions assigned to each switch are not limited to these and may be changed.

The outer switch 32 and the inner switch 33 each have a shape symmetrical with respect to the horizontal center line L2 of the first operation switch 16. The upper switch 34 and the lower switch 35 each have a shape symmetrical with respect to the vertical center line L1 of the first operation switch 16. The upper switch 34 and the lower switch 35 each have a shape symmetrical with respect to the horizontal center line L2 of the first operation switch 16. However, the outer switch 32 and the inner switch 33 each have shapes that are asymmetrical with respect to the vertical center line L 1 of the first operation switch 16.

The outer switch 32, the inner switch 33, the upper switch 34, and the lower switch 35 are integrated with each other. The first operation switch 16 includes grooves 36-38. The inner switch 33, the upper switch 34, and the lower switch 35 are partitioned by the grooves 36-38.

In particular, the grooves 36-38 include an upper groove 36, a lower groove 37, and an intermediate groove 38. The upper groove 36 is disposed between the upper switch 34 and the outer switch 32 and between the upper switch 34 and the inner switch 33. The upper groove 36 partitions the upper switch 34 from the outer switch 32. The upper groove 36 partitions the upper switch 34 from the inner switch 33.

The lower groove 37 is disposed between the lower switch 35 and the outer switch 32 and between the lower switch 35 and the inner switch 33. The lower groove 37 partitions the lower switch 35 from the outer switch 32. The lower groove 37 partitions the lower switch 35 from the inner switch 33. The intermediate groove 38 is disposed between the outer switch 32 and the inner switch 33. The intermediate groove 38 partitions the outer switch 32 from the inner switch 33.

The outer switch 32 and the inner switch 33 are arranged side by side in the vehicle width direction. The inner switch 33 is disposed inward of the outer switch 32 in the vehicle width direction. The inner switch 33 includes a main portion 41 and an extension portion 42. The main portion 41 is located inward of the vertical center line L1 in the vehicle width direction. The main portion 41 is disposed inward of the extension portion 42 in the vehicle width direction. The main portion 41 is disposed symmetrically to the outer switch 32 with respect to the vertical center line L1. The extension portion 42 extends outward from the main portion 41 in the vehicle width direction. The extension portion 42 overlaps with the vertical center line L1 as seen in a top view of the first operation switch 16. The extension portion 42 is disposed between the outer switch 32 and the main portion 41 in the vehicle width direction.

The upper switch 34 and the lower switch 35 are arranged next to each other in the up-down direction. The upper switch 34 is disposed above the extension portion 42 of the inner switch 33. The lower switch 35 is disposed below the extension portion 42 of the inner switch 33.

The inner switch 33 includes a first inner edge 43, a first upper edge 44, a first lower edge 45, a first inclined edge 46, and a second inclined edge 47. The first inner edge 43, the first upper edge 44, and the first lower edge 45 are included in the extension portion 42. The first inner edge 43 is adjacent to the outer switch 32. The first inner edge 43 extends in the up-down direction. The first inner edge 43 is located outward of the vertical center line L1 of the first operation switch 16 in the vehicle width direction.

The first upper edge 44 is adjacent to the upper switch 34. The first upper edge 44 extends in the vehicle width direction. The first lower edge 45 is adjacent to the lower switch 35. The first lower edge 45 extends in the vehicle width direction. The first inclined edge 46 and the second inclined edge 47 are included in the main portion 41. The first inclined edge 46 is adjacent the upper switch 34. The first inclined edge 46 extends obliquely upward and inward in the vehicle width direction. The second inclined edge 47 is adjacent to the lower switch 35. The second inclined edge 47 extends obliquely downward and inward in the vehicle width direction.

The outer switch 32 includes a second inner edge 51, a third inclined edge 52, and a fourth inclined edge 53. The second inner edge 51 is adjacent to the inner switch 33. The second inner edge 51 faces the first inner edge 43 of the inner switch 33. The second inner edge 51 extends in the up-down direction. The third inclined edge 52 is adjacent the upper switch 34. The third inclined edge 52 extends obliquely upward and outward in the vehicle width direction. The fourth inclined edge 53 is adjacent to the lower switch 35. The fourth inclined edge 53 extends obliquely downward and outward in the vehicle width direction.

The upper switch 34 includes a third inner edge 54, a fifth inclined edge 55, and a sixth inclined edge 56. The third inner edge 54 is adjacent to the inner switch 33. The third inner edge 54 faces the first upper edge 44 of the inner switch 33. The third inner edge 54 extends in the vehicle width direction. The fifth inclined edge 55 is adjacent to the inner switch 33. The fifth inclined edge 55 faces the first inclined edge 46 of the inner switch 33. The fifth inclined edge 55 extends obliquely upward and inward in the vehicle width direction. The sixth inclined edge 56 is adjacent the outer switch 32. The sixth inclined edge 56 faces the third inclined edge 52 of the outer switch 32. The sixth inclined edge 56 extends obliquely upward and outward in the vehicle width direction.

The lower switch 35 includes a fourth inner edge 57, a seventh inclined edge 58, and an eighth inclined edge 59. The fourth inner edge 57 is adjacent to the inner switch 33. The fourth inner edge 57 faces the first lower edge 45 of the inner switch 33. The fourth inner edge 57 extends in the vehicle width direction. The seventh inclined edge 58 is adjacent to the inner switch 33. The seventh inclined edge 58 faces the second inclined edge 47 of the inner switch 33. The seventh inclined edge 58 extends obliquely downward and inward in the vehicle width direction. The eighth inclined edge 59 is adjacent the outer switch 32. The eighth inclined edge 59 faces the fourth inclined edge 53 of the outer switch 32. The eighth inclined edge 59 extends obliquely downward and outward in the vehicle width direction.

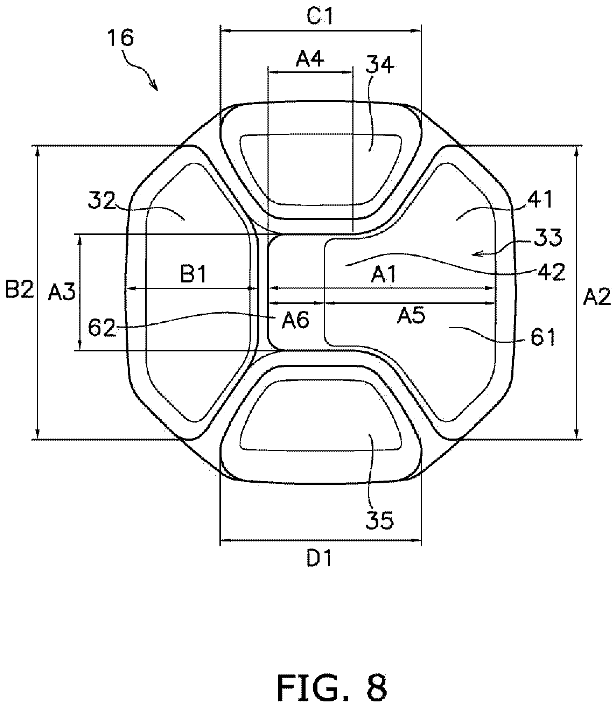

FIG. 8 is an enlarged view of the first operation switch 16, showing the dimensional relationship between the switches 32-35 of the first operation switch 16. In FIG. 8, a part of the configuration of the first operation switch 16 is omitted for ease of understanding. As shown in FIG. 8, a length A1 of the inner switch 33 in the vehicle width direction is greater than a length B1 of the outer switch 32 in the vehicle width direction. A length A2 of the main portion 41 in the up-down direction is greater than a length A3 of the extension portion 42 in the up-down direction. A length B2 of the outer switch 32 in the up-down direction is greater than the length A3 of the extension portion 42 of the inner switch 33 in the up-down direction. The length B2 of the outer switch 32 in the up-down direction is the same as the length A2 of the main portion 41 in the up-down direction.

A length C1 of the upper switch 34 in the vehicle width direction is greater than a length A4 of the extension portion 42 in the vehicle width direction. A length D1 of the lower switch 35 in the vehicle width direction is greater than the length A4 of the extension portion 42 in the vehicle width direction. The length A1 of the inner switch 33 in the vehicle width direction is greater than the length C1 of the upper switch 34 in the vehicle width direction. The length A1 of the inner switch 33 in the vehicle width direction is greater than the length D1 of the lower switch 35 in the vehicle width direction.

As shown in FIG. 5, a height of the inner switch 33 from the upper surface of the first opening 21 is greater than a height of the outer switch 32 from the upper surface of the first opening 21. The inner switch 33 includes an upper flat surface 61 and an inclined surface 62. The upper flat surface 61 is disposed inward of the first inner edge 43 in the vehicle width direction. The upper flat surface 61 is provided across a part of the extension portion 42 and the main portion 41. The outer switch 32 includes a lower flat surface 63. The upper flat surface 61 of the inner switch 33 is located above the lower flat surface 63 of the outer switch 32.

The inclined surface 62 is disposed between the outer switch 32 and the upper flat surface 61 in the vehicle width direction. The inclined surface 62 is disposed between the first inner edge 43 and the upper flat surface 61 in the vehicle width direction. The intermediate groove 38 is disposed between the inclined surface 62 and the lower flat surface 63. The inclined surface 62 extends obliquely upward from the first inner edge 43 toward the upper flat surface 61. The inclined surface 62 is provided on the extension portion 42. As shown in FIG. 7, the inclined surface 62 overlaps with the vertical center line L1 of the first operation switch 16 as seen in the top view of the first operation switch 16. As shown in FIG. 8, a length A5 of the upper flat surface 61 in the vehicle width direction is longer than a length A6 of the inclined surface 62 in the vehicle width direction.

In the straddled vehicle 1 according to the present embodiment described above, the outer switch 32 and the inner switch 33 in the first operation switch 16 are integrated together. Therefore, the first operation switch 16 can be made smaller. Further, the length A1 of the inner switch 33 in the vehicle width direction is longer than the length B1 of the outer switch 32 in the vehicle width direction. Therefore, the rider's thumb can easily reach the inner switch 33, making it easy to operate the inner switch 33. This makes it possible to improve the operability of the first operation switch 16 even if the first operation switch 16 is made smaller.

The straddled vehicle 1 according to the embodiment is a scooter. Alternatively, the straddled vehicle may be another type of vehicle such as a street type, an off-road type, or a moped. The configuration of the straddled vehicle 1 according to the embodiment is provided with the handle cover 11. Alternatively, the handle cover may be omitted.

The straddled vehicle 1 according to the embodiment provides specific arrangement of the switch case 15. Alternatively, the switch case 15 may be disposed inward of the right handle grip 13 in the vehicle width direction. The straddled vehicle 1 according to the embodiment provides specific shape of the first operation switch 16. For example, the external shape of the first operation switch 16 is an octagon. Alternatively, the external shape of the first operation switch 16 may be another polygon, or the outer shape of the first operation switch 16 may be circular or elliptical.

The first operation switch 16 according to the embodiment is a switch for operating the display 14. Alternatively, the first operation switch 16 may be an auto-cruise operation switch or a switch having another function, such as a driving mode operation switch. The second operation switch 17 according to the embodiment is a dimmer switch. Alternatively, the second operation switch 17 may be a switch having another function, such as a kill switch, a horn switch, or a flasher switch.

The shapes of the switches 32-35 of the first operation switch 16 are suggested for the above embodiment. Alternatively, the length B2 of the outer switch 32 in the up-down direction may be different from the length A2 of the main portion 41 in the up-down direction.

### REFERENCE SIGNS LIST

12: Left handle grip, 15: Switch case, 16: First operation switch, 32: Outer switch, 33: Inner switch, 34: Upper switch, 35: Lower switch, 41: Main portion, 42: Extension portion, 43: First inner edge, 61: Upper flat surface, 62: Inclined surface

## Claims

1. A straddled vehicle (1) comprising:
a handle grip (12);
a switch case (15) including an opening (21) and disposed inward of the handle grip (12) in a vehicle width direction; and
a first operation switch that is a seesaw type and protrudes from the opening (21),
wherein
the first operation switch includes
an outer switch (32) and
an inner switch (33) integrated with the outer switch (32) and disposed inward of the outer switch (32) in the vehicle width direction, and
a length (A1) of the inner switch (33) in the vehicle width direction is longer than a length (B1) of the outer switch (32) in the vehicle width direction.

2. The straddled vehicle (1) according to claim 1, wherein the inner switch (33) includes an inner edge (43) adjacent the outer switch (32), and
the inner edge (43) is located outward of a vertical center line (L1) of the first operation switch in the vehicle width direction.

3. The straddled vehicle (1) according to claim 2, wherein the inner switch (33) includes
an extension portion (42) overlapping the vertical center line (L1) as seen in a top view of the first operation switch, and
a main portion (41) arranged inward of the extension portion (42) in the vehicle width direction, and
a length (A2) of the main portion (41) in an up-down direction of the first operation switch is longer than a length (A3) of the extension portion (42) in the up-down direction.

4. The straddled vehicle (1) according to claim 3, wherein a length (B2) of the outer switch (32) in the up-down direction is longer than the length (A3) of the extension portion (42) of the inner switch (33) in the up-down direction.

5. The straddled vehicle (1) according to claim 3 or 4, wherein the first operation switch includes
an upper switch (34) disposed above the extension portion (42) of the inner switch (33) and
a lower switch (35) disposed below the extension portion (42) of the inner switch (33).

6. The straddled vehicle (1) according to claim 5, wherein the upper switch (34) and the lower switch (35) are symmetrical with respect to a horizontal center line (L2) of the first operation switch.

7. The straddled vehicle (1) according to claim 5 or 6, wherein the inner switch (33), the outer switch (32), the upper switch (34), and the lower switch (35) are integrated with each other.

8. The straddled vehicle (1) according to any one of claims 5 to 7, wherein a length (C1) of the upper switch (34) in the vehicle width direction is greater than a length (A4) of the extension portion (42) in the vehicle width direction, and
a length (D1) of the lower switch (35) in the vehicle width direction is greater than the length (A4) of the extension portion (42) in the vehicle width direction.

9. The straddled vehicle (1) according to any one of claims 1 to 8, wherein a height of the inner switch (33) from an upper surface of the opening (21) is higher than a height of the outer switch (32) from the upper surface of the opening (21).

10. The straddled vehicle (1) according to claim 9, wherein the inner switch (33) includes
an inner edge (43) adjacent the outer switch (32),
an upper flat surface (61) disposed inward of the inner edge (43) in the vehicle width direction and above the inner edge (43), and
an inclined surface (62) disposed between the inner edge (43) and the upper flat surface (61) in the vehicle width direction and extending obliquely upward from the inner edge (43) toward the upper flat surface (61).

11. The straddled vehicle (1) according to claim 10, wherein the inclined surface (62) overlaps with a vertical center line (L1) of the first operation switch as seen in a top view of the first operation switch.

12. The straddled vehicle (1) according to claim 10 or 11, wherein a length of the upper flat surface (61) in the vehicle width direction is longer than a length of the inclined surface (62) in the vehicle width direction.

13. The straddled vehicle (1) according to any one of claims 1 to 12, wherein the outer switch (32) and the inner switch (33) are asymmetrical with respect to the vertical center line (L1) of the first operation switch and symmetrical with respect to the horizontal center line (L2) of the first operation switch.

14. The straddled vehicle (1) according to any one of claims 1 to 13, wherein an outer shape of the first operation switch is symmetrical with respect to the vertical center line (L1) of the first operation switch and is symmetrical with respect to the horizontal center line (L2) of the first operation switch.

15. The straddled vehicle (1) according to any one of claims 1 to 14, further comprising a second operation switch (17) disposed outward of the first operation switch in the vehicle width direction.
